# DEMANDE DE BREVET EUROPEEN

(11) **EP 1 344 681 A1**
(43) Date de publication de la demande: **17.09.2003**
(21) Numéro de dépôt: 02290617.6
(22) Date de dépôt: 12.03.2002
(51) Int. Cl.: B60Q 1/00, B60L 1/00

(54) **Dispositif d'alimentation pour coposants électriques installés dans un véhicule automobile**

(71) Demandeur: VALEO VISION, 93012 Bobigny Cédex (FR)
(72) Inventeur: Lelevé, Joel, Valeo Vision, 93012 Bobigny Cedex (FR)

(57) **Abrégé**

Dispositif d'alimentation pour composants électriques 12 volts installés dans un véhicule automobile, en particulier pour des composants du système d'éclairage ou de signalisation, à partir d'une source d'énergie électrique (E2) dont la tension est supérieure à la tension nominale de 12 volts des composants, lesquels sont habituellement protégés par un réseau usuel de protection lorsqu'ils sont alimentés par une source à leur tension nominale. Le dispositif comporte des éléments (D1, C, Dz) identiques ou semblables à ceux d'un réseau usuel de protection placé en tête de l'entrée 12 volts d'un composant électrique (1), qui sont combinés avec un minimum de composants actifs supplémentaires (T) afin de réaliser une alimentation régulée sommaire à 12 volts, qui assure en outre une protection des composants électriques (1) équivalente à celle du réseau usuel de protection.

## Description

L'invention concerne un dispositif d'alimentation pour composants électriques installés dans un véhicule automobile, en particulier pour des composants du système d'éclairage ou de signalisation.

Les équipements électriques de véhicules automobiles sont de plus en plus nombreux, de sorte qu'une augmentation de la puissance électrique disponible devient nécessaire, ce qui impose pratiquement une augmentation de la tension du réseau électrique du véhicule, pour éviter des intensités trop élevées.

Dans les véhicules de tourisme actuels la tension continue du réseau est de 12 volts. A plus ou moins brève échéance cette tension doit augmenter sensiblement, notamment pour passer à 42 volts.

Il en résulte des problèmes car, pour le moment, de nombreux composants électriques conçus pour fonctionner sous une tension de 12 volts n'ont pas d'équivalents en coût et performances adaptés à une tension continue nettement plus élevée.

Au cours d'une période transitoire, des composants prévus pour une tension de 12 volts seront conservés alors que la tension du réseau sera plus élevée.

Il est même possible qu'après la période transitoire certains équipements électriques continuent à fonctionner sous une tension de 12 volts pour des raisons technologiques.

Ainsi, actuellement, un dispositif correcteur d'assiette pour phare de véhicule utilise un moteur électrique de faible puissance, de l'ordre de 5 watts ; le fil du bobinage a un diamètre réduit mais la résistance mécanique de ce fil de bobinage reste cependant compatible avec les machines de bobinage à haut débit pour une fabrication économique en grande série avec peu de rebut. Si un tel moteur devait être prévu pour fonctionner sous une tension nettement plus élevée, par exemple de 42 volts, le diamètre du fil de bobinage s'en trouverait sensiblement réduit et, par conséquent, sa résistance mécanique à la traction diminuerait, de sorte que des problèmes considérables de rupture du fil au bobinage à grande vitesse se poseraient et entraîneraient une augmentation de coût inacceptable.

Un autre exemple est celui des lampes utilisées sur les véhicules automobiles pour l'éclairage, notamment pour les phares. Ces lampes doivent avoir des filaments suffisamment résistants mécaniquement en raison des secousses produites lors du roulement du véhicule. Une augmentation de la tension de fonctionnement entraînerait une diminution de la section du filament qui se trouverait mécaniquement fragilisé, avec une durée de vie réduite.

Pour ne pas modifier un système électrique fonctionnant sous une tension continue de 12 volts, alors que la source d'énergie électrique est sous une tension plus élevée, on peut faire précéder le système d'un convertisseur continu/continu. Toutefois, un tel convertisseur est coûteux, encombrant et générateur de perturbations électromagnétiques sauf si des moyens de blindage et de filtrage sont prévus, ce qui augmente encore le prix du convertisseur.

Une approche plus économique consiste à alimenter des lampes 12 volts à partir d'une tension plus élevée en interposant un hacheur. Dans le cas d'une tension de 42 volts, si le rapport cyclique du hacheur est de l'ordre de 1/9, la lampe "voit" une tension efficace du même ordre de grandeur que celle du réseau 12 volts. Ce hacheur pour lampe peut d'ailleurs être utilisé pour alimenter d'autres systèmes à 12 volts, avec un minimum de filtrage par self ou résistance, et capacité. L'utilisation d'un hacheur est plus économique qu'un convertisseur, mais est difficile à gérer en fonction des courants consommés par le système à 12 volts. Dans le cas d'un moteur d'actionneur 12 volts pour correcteur d'assiette de phare, la consommation est essentiellement variable en fonction des variations d'assiette du véhicule. Les moyens de filtrage (self, capacité) conventionnels ne permettent pas d'assurer une tension continue compatible avec la plage de fonctionnement de l'actionneur (couramment entre 10 et 16 volts). La tension aux bornes de l'actionneur, lorsque ce dernier est dans une période d'arrêt, peut monter jusqu'à la valeur de 42 volts, ce qui doit être évité.

En outre, un élément ou composant électrique de véhicule automobile de faible puissance, fonctionnant sous 12 volts est protégé par un réseau usuel de protection constitué d'une diode contre les inversions de tension, d'une capacité de filtrage contre l'entrée de courants induits sur les lignes d'alimentation et d'une diode Zener de protection contre les surtensions.

L'invention a pour but, surtout, de fournir au moindre coût une alimentation simple en 12 volts à partir d'une tension supérieure, notamment de 42 volts, tout en assurant une protection des composants électriques équivalente à celle du réseau usuel de protection en 12 volts.

La solution de l'invention consiste à prendre des éléments identiques ou semblables à ceux d'un réseau usuel de protection placé en tête de l'entrée 12 volts d'un composant électrique, et à les combiner avec un minimum de composants actifs supplémentaires afin de réaliser une alimentation régulée sommaire à 12 volts, qui assure en outre une protection des composants électriques équivalente à celle du réseau usuel de protection en 12 volts.

Un dispositif d'alimentation pour composants électriques 12 volts installés dans un véhicule automobile, en particulier pour des composants du système d'éclairage ou de signalisation, à partir d'une source d'énergie électrique dont la tension est supérieure à la tension nominale de 12 volts des composants, comportant un réseau de protection pour leur alimentation par une source à leur tension nominale, est caractérisé par le fait que le réseau de protection comporte des composants supplémentaires afin de réaliser une alimentation régulée sommaire à 12 volts à partir de la source d'énergie électrique dont la tension est supérieure à la tension nominale de 12 volts, et par le fait que la référence de tension pour l'alimentation régulée est une diode Zener (Dz), en particulier à tension de Zener égale à 12 volts, ou voisine de cette tension.

De préférence, un seul composant actif supplémentaire est prévu et constitué par un transistor compatible avec les courants et les tensions des réseaux d'alimentation.

On utilise comme référence de tension pour l'alimentation régulée une diode Zener à tension de Zener égale à 12 volts, ou voisine de cette tension, semblable ou identique à la diode Zener qui sert de protection contre les surtensions dans un réseau usuel de protection.

Avantageusement, le transistor pour l'alimentation régulée est du type npn avec sa base reliée à la cathode de la diode Zener dont l'anode est reliée à la masse, le collecteur du transistor étant relié à la cathode d'une diode de protection contre les inversions de tension, l'anode de cette diode étant reliée à la borne positive de l'alimentation; la base du transistor est en outre reliée à son collecteur par une résistance, tandis que l'émetteur du transistor est relié à la charge et qu'une capacité de filtrage contre l'entrée de courants induits est branchée en parallèle entre l'émetteur et la masse.

L'alimentation de la source de tension régulée peut avantageusement être pulsée et provenir d'une alimentation de lampe à filament. Ceci permet d'utiliser pour les composants de régulation, essentiellement transistor et résistance, des composants de faible puissance car ils ne fonctionnent que pendant une fraction du temps, de l'ordre de 1/9 dans le cas d'une alimentation sur réseau 42 volts.

La capacité peut être de faible valeur, de l'ordre de quelques dizaines de µF (microFarads), fonction de la fréquence du hacheur et de la charge.

L'invention s'applique non seulement aux composants du système d'éclairage et de signalisation de petite ou moyenne puissance, notamment inférieure à 20 watts, mais également à des composants d'autres systèmes du véhicule, en particulier feux à led (diode électroluminescente), néons, micro moteurs fonctionnant sous 12 volts et qui ne peuvent être économiquement modifiés pour être alimentés directement en 42 volts.

L'avantage économique de la solution de l'invention est manifeste car le surcoût du dispositif, par rapport au réseau usuel de protection, se limite à un transistor de faible puissance et à une résistance.

Un autre avantage réside dans la facilité d'intégration. Les deux composants supplémentaires sont peu encombrants et n'engendrent pas de modifications importantes soit sur le circuit imprimé qui les porte, soit sur les volumes disponibles dans l'environnement du circuit imprimé.

Il n'y a pas de surcoût d'outillage significatif et les contraintes de validation sont limitées aux seuls composants supplémentaires.

L'invention consiste, mises à part les dispositions exposées ci-dessus, en un certain nombre d'autres dispositions dont il sera plus explicitement question ci-après à propos d'un exemple décrit avec référence au dessin ci-annexé, mais qui n'est nullement limitatif. Sur ce dessin :
Fig.1 est un schéma électrique d'un réseau usuel de protection pour composant électrique de petite puissance installé dans un véhicule automobile et alimenté sous 12 volts ;
Fig.2 est un schéma du dispositif d'alimentation en 12 volts selon l'invention à partir d'une tension plus élevée ;
Fig.3 montre schématiquement en perspective un circuit imprimé usuel de correcteur d'assiette pour phare d'automobile, prévu pour fonctionner en 12 volts ; et
Fig.4 montre semblablement à Fig.3 le circuit imprimé modifié selon l'invention pour alimenter le correcteur sous 12 volts, à partir d'une tension plus élevée.

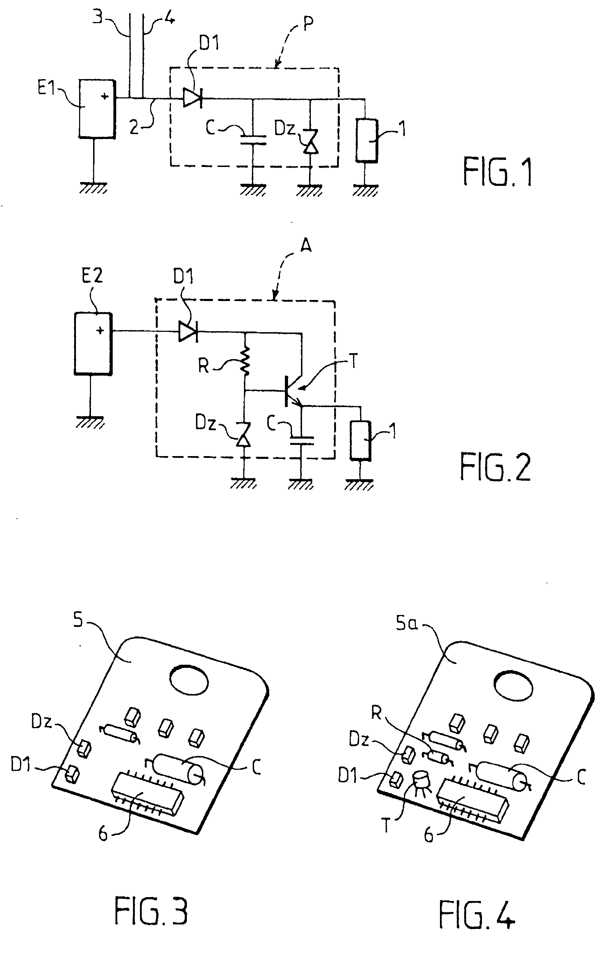

En se reportant à Fig.1, on peut voir un schéma classique d'alimentation, avec réseau usuel de protection P, d'un composant électrique 1 installé dans un véhicule automobile. Le composant 1 est prévu pour fonctionner sous une tension continue de 12 volts, et est alimenté à partir d'une source d'énergie E1 dont la tension est également de 12 volts.

Le composant 1 peut être un composant du système d'éclairage ou de signalisation du véhicule, notamment un moteur d'actionneur pour corriger l'assiette d'un phare du véhicule. Un tel moteur a une faible puissance, de l'ordre de 5 watts.

Une borne du composant 1 est reliée à la masse et une autre borne est reliée par un conducteur 2 à la borne + de la source E1. D'autres conducteurs 3, 4 sont reliés à la borne + de la source E1 pour alimenter divers appareils, susceptibles de créer des surtensions sur la ligne 2.

Le réseau usuel de protection P, prévu en tête de l'entrée du composant 1, comprend une diode D1 de protection contre les inversions de polarité dont l'anode est reliée à la borne + de la source E1 et la cathode est reliée à la borne d'entrée du composant 1. Le réseau P comprend en outre une capacité C de filtrage branchée en parallèle entre la cathode de la diode D1 et la masse, ainsi qu'une diode Zener Dz contre les surtensions. La diode Zener est branchée entre la masse et la borne d'entrée du composant 1; la tension de Zener de cette diode est légèrement supérieure à la tension maximale de fonctionnement du composant 1, à savoir 18 volts.

Fig.2 est le schéma du dispositif A selon l'invention qui permet d'alimenter le composant 1 sous sa tension nominale de 12 volts à partir d'une source d'énergie E2 dont la tension est plus élevée, notamment égale à 42 volts, tout en assurant une protection du composant 1 équivalente à celle obtenue avec le réseau P de Fig.1.

Le dispositif d'alimentation A de Fig.2 comporte des éléments identiques ou semblables à ceux du réseau P. Ils seront désignés par les mêmes références. Ces éléments sont combinés différemment avec un composant actif formé par un transistor T pour réaliser une alimentation régulée sommaire.

Le transistor T, de type npn, est choisi pour être compatible avec les courants et les tensions mises en jeu pour l'alimentation du composant 1. La base de ce transistor T est reliée à la cathode de la diode Zener Dz dont l'anode est reliée à la masse. Une résistance R relie la cathode de la diode D1 à la cathode de la diode Dz. L'anode de D1 est reliée à la borne + de la source E2. Le collecteur du transistor T est relié à la cathode de la diode D1. L'émetteur du transistor T est relié à la borne d'entrée du composant 1. La capacité C est branchée entre l'émetteur du transistor T et la masse.

Il apparaît que l'alimentation A ne comporte, comme éléments supplémentaires par rapport au réseau P de Fig.1, qu' un seul composant actif formé par le transistor T et un composant passif constitué par la résistance R.

Le fonctionnement de l'alimentation A est le suivant.

Le transistor T reproduit aux bornes de la charge 1 la tension de Zener de la diode Dz, c'est-à-dire sensiblement 12 volts. Si la tension aux bornes de la charge 1 a tendance à dépasser la tension de Zener appliquée à la base du transistor T, ce dernier est polarisé en inverse et se bloque. La protection de la charge 1 contre les surtensions est donc assurée.

L'alimentation du circuit A peut être pulsée et provenir d'un hacheur constituant la source E2 et alimentant le circuit par des impulsions de 42 volts suivant un rapport cyclique déterminé d'environ 1/9. Cela permet d'utiliser, dans le circuit A, des éléments de faible puissance car ils ne fonctionnent qu' une fraction (1/9) du temps. La capacité C a une valeur faible, de l'ordre de quelques dizaines de µF (microFarads), fonction de la fréquence du hacheur et de la charge.

Fig.3 montre schématiquement un circuit imprimé usuel pour alimenter à partir d'une source à 12 volts, un moteur 12 volts de correcteur d'assiette. Sur la plaque 5 du circuit sont implantés divers éléments tels qu'un circuit intégré 6, une capacité C, une diode D1 de protection contre les inversions de polarité, une diode Zener Dz. Les connexions prévues sous la plaque 5 ne sont pas visibles.

Fig.4 montre le circuit imprimé selon l'invention permettant d'alimenter le même moteur sous 12 volts à partir d'une source de 42 volts. Les mêmes éléments se retrouvent sur la plaque 5a du circuit, complétés par le transistor T et la résistance R dont l'implantation sur la carte 5a ne crée pas de difficulté. Les connexions sous la carte 5a sont réalisées selon le schéma de Fig.2.

Le surcoût du dispositif d'alimentation A, par rapport au réseau usuel P de protection, se limite à un transistor de faible puissance T et à une résistance R.

Le transistor T et la résistance R sont peu encombrants et n'engendrent pas de modification importante aussi bien sur le circuit imprimé qui les porte que pour les volumes disponibles dans l'environnement du circuit imprimé. Il n'y a pas de surcoût d'outillage significatif et les contraintes de validation sont limitées aux seuls composants supplémentaires T et R.

## Revendications

1. Dispositif d'alimentation pour composants électriques 12 volts installés dans un véhicule automobile, en particulier pour des composants du système d'éclairage ou de signalisation, à partir d'une source d'énergie électrique (E2) dont la tension est supérieure à la tension nominale de 12 volts des composants, comportant un réseau (D1, C, Dz) de protection pour leur alimentation par une source (E1) à leur tension nominale, **caractérisé par le fait que** le réseau de protection (A) comporte des composants (R, T) supplémentaires afin de réaliser une alimentation régulée sommaire à 12 volts à partir de la source d'énergie électrique (E2) dont la tension est supérieure à la tension nominale de 12 volts, et en ce que la référence de tension pour l'alimentation régulée est une diode Zener (Dz), en particulier à tension de Zener égale à 12 volts, ou voisine de cette tension.

2. Dispositif d'alimentation selon la revendication 1, **caractérisé par le fait qu'**il comporte un seul composant actif supplémentaire constitué par un transistor (T) compatible avec les courants et les tensions des réseaux d'alimentation.

3. Dispositif d'alimentation selon la revendication 2, **caractérisé par le fait que** le transistor (T) est du type npn.

4. Dispositif d'alimentation selon la revendication 3, **caractérisé par le fait que** la base du transistor (T) est reliée à la cathode de la diode Zener (Dz) dont l'anode est reliée à la masse, le collecteur du transistor (T) étant relié à la cathode d'une diode de protection (D1) contre les inversions de tension, l'anode de cette diode (D1) étant reliée à la borne positive de l'alimentation (E2), et la base du transistor (T) est en outre reliée à son collecteur par une résistance (R), tandis que l'émetteur du transistor (T) est relié à la charge (1), et qu'une capacité (C) de filtrage contre l'entrée de courants induits est branchée en parallèle entre l'émetteur et la masse.

5. Dispositif d'alimentation selon l'une quelconque des revendications précédentes, **caractérisé par le fait que** la source d'énergie électrique (E2) est pulsée.

6. Dispositif d'alimentation selon la revendication 5, **caractérisé par le fait que** la source d'énergie électrique (E2) comprend un hacheur.

7. Dispositif d'alimentation selon l'une des revendications précédentes, **caractérisé par le fait que** la tension de la source d'énergie électrique (E2) est de 42 volts.

8. Dispositif d'alimentation selon les revendications 5 et 7, ou 6 et 7, **caractérisé par le fait que** le rapport cyclique de la source pulsée est de l'ordre de 1/9.

9. Correcteur d'assiette de phare de véhicule **caractérisé en ce qu'**il comporte un dispositif d'alimentation selon l'une quelconque des revendications précédentes.
